# EUROPÄISCHE PATENTSCHRIFT

(11) **EP 1 166 698 B1**
(45) Veröffentlichungstag und Bekanntmachung des Hinweises auf die Patenterteilung: **23.04.2003**
(21) Anmeldenummer: 01111598.7
(22) Anmeldetag: 12.05.2001
(51) Int. Cl.: A47J 31/58, A47J 31/56

(54) **Boiler und Dampfgargerät mit einem derartigen Boiler**
Boiler and steam cooker with such a boiler
Bouilloire et cuiseur à vapeur avec une telle bouilloire

(30) Priorität: 28.06.2000 CH 12822000
(43) Veröffentlichungstag der Anmeldung: 02.01.2002
(73) Patentinhaber: V-Zug AG, 6301 Zug (CH)
(72) Erfinder: Werner, Jürg, 8909 Zwillikon (CH); Gisler, Jürg, 6105 Schachen (CH)
(74) Vertreter: Blum, Rudolf Emil Ernst

(56) Entgegenhaltungen:
- US-A- 4 214 148
- US-A- 4 991 545
- PATENT ABSTRACTS OF JAPAN vol. 014, no. 548 (C-0785), 5. Dezember 1990 (1990-12-05) & JP 02 234724 A (MATSUSHITA ELECTRIC IND CO LTD), 17. September 1990 (1990-09-17)

## Beschreibung

Die Erfindung betrifft einen Boiler und ein Dampfgargerät mit einem derartigen Boiler gemäss Oberbegriff von Anspruch 1 und 11.

Boiler, d.h. Geräte zum Kochen von Wasser, werden in verschiedensten Anwendungen eingesetzt. Insbesondere werden sie in Dampfgargeräten als Dampfquellen verwendet.

Bei ihrem Betrieb bilden sich jedoch unerwünschte Kalkablagerungen an der Heizung. Es stellt sich deshalb das Problem, derartige Ablagerungen in einfacher Weise zuverlässig zu detektieren.

Weiter muss in Boilern dieser Art oftmals das Wasserniveau überwacht werden, insbesondere damit dem Boiler bedarfsweise Frischwasser zugeführt werden kann. Es zeigt sich jedoch, dass die Messung des Wasserniveaus in Boilern schwierig ist, da die Wasseroberfläche unruhig sein kann. Es wurde deshalb vorgeschlagen, den Niveausensor in einem separaten, mit dem Boiler kommunizierenden Kompartiment anzuordnen, was jedoch immer noch nicht in allen Fällen zu befriedigen vermag.

US 4 214 148 beschreibt einen Durchlauferhitzer gemäß dem Oberbegriff des Anspruchs 1, bei welchem die Heizungstemperatur gemessen wird. Da eine Verkalkung der Heizung den Wärmeübergang von der Heizung zum Wasser beeinträchtigt und somit die Hiezungstemperatur erhöht, kann mit durch Vergleich der Hiezungstemperatur mit einem absoluten Schwellwert eine Verkalkung festgestellt werden. Es zeigt sich jedoch, dass dieses Verfahren oftmals nicht ausreichend genau ist.

Es ist deshalb Aufgabe der Erfindung, einen Boiler der eingangs genannten Art bereitzustellen, der eine genauere Detektion der Verkalkung erlaubt.

Diese Aufgabe wird vom Gegenstand der unabhängigen Ansprüche erfüllt.

Im Boiler ist also ein Heiztemperatursensor vorgesehen, welcher in thermischem Kontakt mit der Heizung steht und eine von der Heizungstemperatur abhängige Temperatur misst. Mit zunehmender Verkalkung der Heizung steigt diese Temperatur an. Somit kann aufgrund des Signals vom Heiztemperatursensor eine Verkalkung der Heizung detektiert werden.

Ferner ist auch ein Wassertemperatursensor vorgesehen, um die Temperatur des Wassers zu bestimmen. Durch Auswerten der Differenz der Signale vom Wassertemperatursensor und vom Heiztemperatursensor können verlässlichere Resultate über eine Verkalkung gewonnen werden, da diese Differenz direkte Aussagen über den Temperaturabfall zwischen Heizung und Wasser erlaubt. Dieser Temperaturabfall vergrössert sich, wenn die Heizung durch eine Kalkschicht vom Wasser getrennt wird.

Die Messung der Verkalkung sollte möglichst am Ende der Aufheizphase durchgeführt werden, d.h. kurz vor Erreichen der Siedetemperatur. Zu diesem Zeitpunkt liegen definierte Verhältnisse vor, während zu einem späteren Zeitpunkt eine Regelung einsetzen kann, die Einfluss auf die Heizleistung hat. Dies ist insbesondere in Dampfgargeräten der Fall.

Vorzugsweise wird das Wasserniveau dann detektiert, wenn die Heizung ausgeschaltet ist. Bei ausgeschalteter Heizung kocht das Wasser nicht und die Wasseroberfläche beruhigt sich. Deshalb können genauere Messungen durchgeführt werden.

Vorzugsweise werden Heizphasen, die eine gegebene Zeitdauer überschreiten, für eine Messung des Niveaudetektors unterbrochen, so dass z.B. auch beim Aufheizen des Boilers oder bei längeren Dampfphasen das Wasserniveau überwacht werden kann.

Frischwasser sollte dem Boiler vorzugsweise auf oder unterhalb der Höhe der Heizung zugeführt werden, da sich beim Kochen auf dieser Höhe normalerweise Wasser befindet. Würde Frischwasser in einen oberen Teil des Wassertanks des Boilers zugeführt, so würde das Frischwasser einen Teil des Dampfs auskondensieren, was insbesondere bei der Dampferzeugung unerwünscht ist.

Vorzugsweise bestehen die Wände des Boilers im Bereich der Heizung aus Metall, ansonsten aus Kunststoff. Dies hat den Vorteil, dass Wärmeverluste gering gehalten werden können, dass im Bereich der Heizung aber erhöhte Temperaturen nicht zu Schäden führen und Heizstrahlung in den Wassertank reflektiert wird. Als besonders geeignetes Kunststoffmaterial hat sich Polysulfon erwiesen, da dieses eine hohe Temperaturbeständigkeit besitzt und auch im Nahrungsmittelbereich eingesetzt werden kann.

Der erfindungsgemässe Boiler eignet sich insbesondere für den Einbau in Dampfgargeräte.

Weitere bevorzugte Ausführungen ergeben sich aus den abhängigen Ansprüchen sowie aus der nun folgenden Beschreibung anhand der Figuren. Dabei zeigen:
Fig. 1 den schematischen, nicht massstabgetreuen Aufbau eines Dampfgargeräts mit Boiler,
Fig. 2 einen Vertikalschnitt durch eine erste Ausführung des Boilers entlang Linie II-II von Fig. 4,
Fig. 3 einen Schnitt entlang Linie III-III von Fig. 2,
Fig. 4 einen Schnitt entlang Linie IV-IV von Fig. 2,
Fig. 5 einen Vertikalschnitt durch eine zweite Ausführung des Boilers entlang Linie V-V von Fig. 7,
Fig. 6 einen Schnitt entlang Linie VI-VI von Fig. 5 und
Fig. 7 einen Schnitt entlang Linie VII-VII von Fig. 5

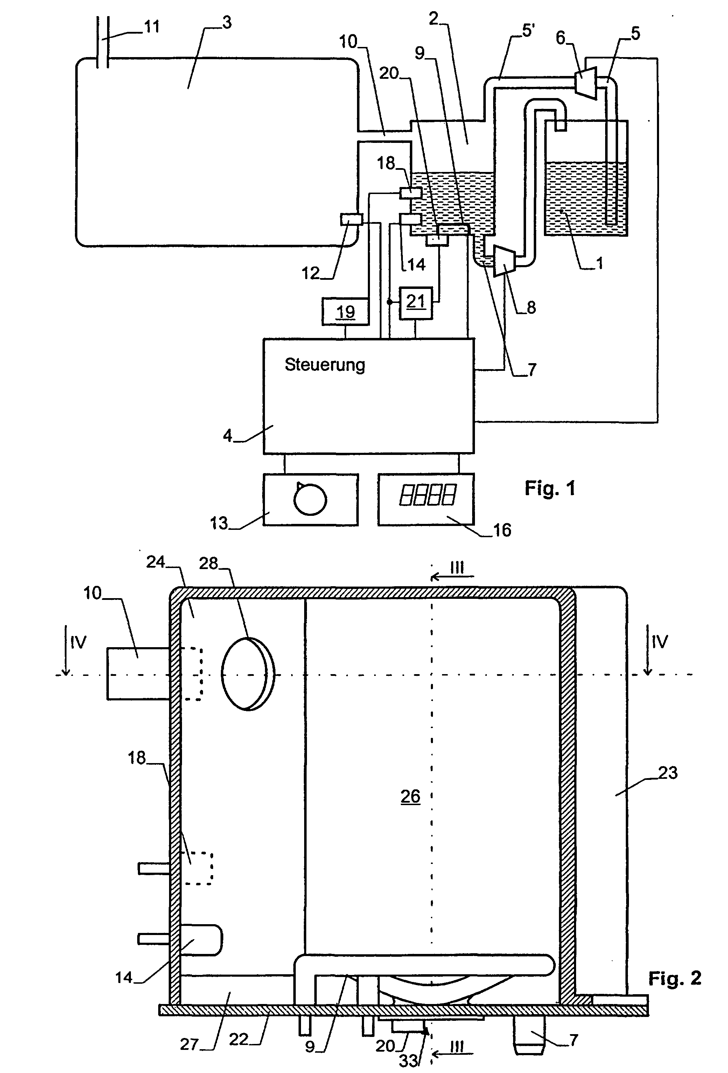

Fig. 1 zeigt den Grundaufbau eines Dampfgargeräts. Das Gerät besitzt, in einem nicht dargestellten Gehäuse, einen Wasserbehälter 1, einen Boiler 2, einen Garraum 3 und eine Steuerung 4.

Der Wasserbehälter 1 ist vorzugsweise ein schubladenartiger Einsatz, der eine Vorratsmenge Wasser fasst. Über ein Ansaugrohr 5, eine Ansaugpumpe 6 und eine Verbindungsleitung 5' kann dem Wasserbehälter 1 bedarfsweise Wasser entnommen und zum Boiler 2 geführt werden. Nach dem Betrieb kann im Boiler 2 verbleibendes Wasser über eine Abflussleitung 7 und eine Abflusspumpe 8 zurück zum Wasserbehälter 1 gepumpt werden.

Im Boiler 2 ist eine Heizung 9 angeordnet, die von der Steuerung 4 bedarfsweise mit Strom versorgt wird. Wird das Wasser im Boiler 2 zum Kochen gebracht, so strömt Dampf über eine Leitung 10 in den Garraum 3 und erwärmt das Gargut. Überschüssiger Dampf entweicht durch eine Öffnung 11.

Sinkt das Wasserniveau im Boiler 2 unter eine gewisse Grenze, so schaltet die Steuerung 4 im Normalbetrieb die Pumpe 6 ein, so dass Wasser vom Wasserbehälter 1 nachfliesst und sichergestellt wird, dass die Heizung 9 immer mit Wasser bedeckt ist. Hierzu ist im Boiler 2 ein Niveausensor 18 angeordnet, der zusammen mit einer Niveau-Messeinheit 19 einen Niveaudetektor bildet.

Im Boiler 2 sind ferner ein oder zwei Temperatursensoren angeordnet. Ein (optionaler) Wassertemperatursensor 14 dient zur Messung der Temperatur des Wassers im Boiler 2. Ein Heiztemperatursensor 20 steht in thermischem Kontakt mit der Heizung 9 und misst im wesentlichen deren Temperatur.

Die Signale des Wassertemperatursensors 14 und des Heiztemperatursensors 20 werden einer Kalk-Messeinheit 21 zugeführt. Die Temperatursensoren 14 und 20 und die Kalk-Messeinheit 21 bilden zusammen einen Kalkdetektor, mit welchem Kalkablagerungen auf der Heizung 9 erkannt werden können.

Zur Regelung der Temperatur Tgr im Garraum ist ein Garraum-Temperatursensor 12 vorgesehen. Der Benutzer kann an einer Eingabeeinheit 13 die gewünschte Solltemperatur Tgs einstellen. Die Steuerung 4 versucht sodann, diese Solltemperatur Tgs im Garraum zu erreichen, indem sie die Heizung 9 einschaltet, solange Tgr < Tgs ist.

Zur Anzeige der Betriebsparameter des Geräts ist eine Anzeige 16 vorgesehen.

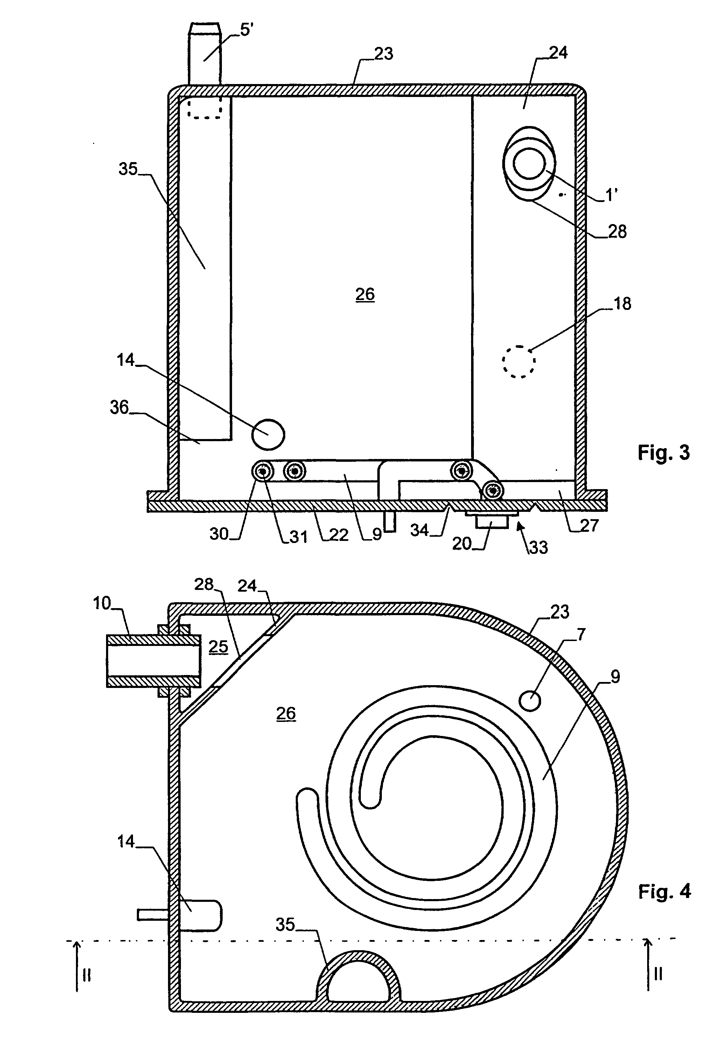

Eine erste Ausführung des Boilers 2 wird in den Figuren 2 - 4 dargestellt. Der Boiler 2 besitzt eine Grundplatte 22 aus Metall, welche wasserdicht mit einer Haube 23 aus Kunststoff, 1 vorzugsweise Polysulfon, verbunden ist. Zusammen bilden die Grundplatte 22 und die Haube 23 einen Wassertank 26 zur Aufnahme des zu erhitzenden Wassers, wobei die Haube 23 dessen Seitenwände bildet. Die Heizung 9 ist am Boden des Wassertanks 26 angeordnet.

In einer Ecke des Wassertanks 26 kann eine vertikale Trennwand 24 angeordnet werden, die ein Abteil 25 abtrennt. Die Trennwand 24 ist nicht ganz bis zum Boden des Boilers geführt, so dass an deren unterem Ende eine Öffnung 27 gebildet wird, über die das Abteil 25 mit dem Wassertank 26 kommuniziert.

Im Abteil 25 ist der Niveausensor 18 angeordnet. Er besteht aus einer Elektrode, über die der elektrische Widerstand durch das Wasser zur Grundplatte des Boilers gemessen werden kann. Aufgrund der entsprechenden Widerstandsänderung kann über den Niveausensor 18 festgestellt werden, ob sich die Oberfläche des Wassers oberoder unterhalb des Niveausensors 18 befindet. Die Anordnung des Niveausensors 18 in einem separaten Abteil hat den Vorteil, dass (wie eingangs erwähnt) auch bei kochendem Wasser die Wasseroberfläche einigermassen ruhig bleibt, was genauere Messungen zulässt. Eine noch genauere Messung ergibt sich aus der weiter unten beschriebenen Messstrategie.

In das Abteil 25 mündet ferner die Leitung 10 zum Garraum. Damit Dampf vom Wassertank 26 zur Leitung 10 gelangen kann, ist im oberen Teil der Trennwand 24 eine Öffnung 28 angeordnet.

Am Boden des Wassertanks 26 ist die Heizung 9 befestigt. Sie besteht aus einer Heizschlange mit einem geerdeten, rohrförmigen Metallgehäuse 30, welches einen Heizwendel 31 umschliesst, und ist an der Grundplatte 22 befestigt. Ein Teil der Heizung 9 ist zur Grundplatte 22 heruntergebogen und mit deren Innenseite in einem Berührungsbereich 33 verschweisst.

Auf der Aussenseite des Berührungsbereichs 33 der Grundplatte 22 ist der Heiztemperatursensor 20 befestigt, so dass dieser über eine von der Grundplatte gebildete Metallbrücke 22 mit dem Gehäuse 30 der Heizung 9 verbunden ist im wesentlichen dessen Temperatur misst. Damit die Temperatur am Heiztemperatursensor 20 noch besser jener des Gehäuses 30 der Heizung 9 folgt, kann der Berührungsbereich 33 der Grundplatte 22 von einer Sicke 34 umgeben sein, die den Wärmefluss zwischen dem Berührungsbereich 33 und den übrigen Teilen der Grundplatte 22 reduziert.

Der Wassertemperatursensor 14 ist an einem unteren Teil der Wand des Wassertanks 26 befestigt.

Die Verbindungsleitung 5' endet im Deckel des Wassertanks 26 und mündet in eine Frischwasserzuleitung 35, die in der Wand des Wassertanks 26 ausgeformt ist und eine Öffnung 36 auf oder unterhalb der Höhe der Heizung 9 besitzt. Diese Anordnung hat den Vorteil, dass das von der Verbindungsleitung 5' kommende Frischwasser nicht mit dem Dampf im Wassertank 26 in Berührung kommt, sondern direkt in die flüssige Phase des Wassers fliesst.

Wie bereits erwähnt, dient die Niveau-Messeinheit 19 dazu, das Wasserniveau im Boiler 2 zu kontrollieren. Hierzu legt sie eine Spannung zwischen dem Niveausensor 18 und der Grundplatte 22 an und detektiert den fliessenden Strom. Liegt dieser Strom oberhalb einer vorgegebenen Grenze, so wird angenommen, dass das Wasserniveau oberhalb des Niveausensors 18 liegt.

Wie bereits erwähnt, kann diese Messung vom Brodeln des Wassers beeinträchtigt werden. Deshalb ist die Niveau-Messeinheit 19 so ausgestaltet, dass sie nur dann Messungen durchführt, wenn die Heizung 9 nicht im Betrieb ist. Im normalen, geregelten Betrieb des Dampfgargeräts ist dies z.B. dann der Fall, wenn der Temperatursensor 12 eine zu hohe Temperatur im Garraum 3 detektiert.

Falls jedoch längere Heizphasen notwendig sind, so unterbricht die Heizungssteuerung 4 die Stromzufuhr zur Heizung 9 nach einer vorgegebenen Zeit für z.B. einige Sekunden, so dass das Wasser nicht mehr brodelt und die Niveau-Messeinheit 19 eine ungestörte Messung durchführen kann.

Wie ebenfalls bereits erwähnt, dient die Kalk-Messeinheit 21 zum Erkennen von Kalkablagerungen auf der Heizung 9. Hierzu bestimmt sie den Temperaturunterschied zwischen den von den Temperatursensoren 14 und 20 gemessenen Temperaturen. Steigt dieser Temperaturunterschied im Betrieb der Heizung über z.B. 10 °C an, so ist dies ein Anzeichen für einen hohen Wärmewiderstand zwischen Heizung und Wasser, wie er von Kalkablagerungen verursacht wird. In diesem Falle wird dem Anwender z.B. über Anzeige 16 mitgeteilt, dass eine Entkalkung durchgeführt werden muss, oder es wird automatisch ein Entkalkungsprogramm eingeleitet.

Alternativ zu einer Differenzmessung zwischen den Temperatursensoren 14 und 20 kann eine Verkalkung aus dem Signal des Temperatursensors 20 alleine detektiert werden, da die Siedetemperatur des Wassers im wesentlichen konstant ist. Steigt die Temperatur beim Temperatursensor 20 über einen Schwellwert von z.B. 110 °C an, so kann angenommen werden, dass eine unerwünscht starke Verkalkung vorliegt.

Der genannte Temperaturunterschied ist von der jeweiligen Heizleistung abhängig und wird vorzugsweise bei voller Heizleistung gemessen. Da während dem normalen Regelbetrieb des Dampfgargeräts die Heizung 9 mit einer von der Garraumtemperatur abhängigen Leistung betrieben wird, findet die Kalkdetektion vorzugsweise am Ende der Aufheizphase statt. Beim Aufheizen wird die Heizung mit voller Leistung betrieben, so dass der Temperaturunterschied relativ gross und gut messbar ist.

Vorzugsweise wird das Signal des Temperatursensors 20 auch verwendet, um die Heizung vor einer Überhitzung zu schützen. Dazu wird die Heizleistung reduziert, sobald die Temperatur des Temperatursensors einen Grenzwert von z.B. 110 °C überschreitet. Falls der Benutzer z.B. trotz Aufforderung keine Entkalkung einleitet, wird also die Heizleistung automatisch geringer.

Die oben erwähnte Niveau-Messeinheit 19 sowie die Kalk-Messeinheit 21 können in Hard- und/oder Software ausgestaltet sein und sind vorzugsweise Teil der Elektronik der Steuerung 4.

In der obigen Ausführung ist der Heiztemperatursensor 20 indirekt über die Grundplatte mit dem Metallgehäuse 30 der Heizung 9 verbunden. Es ist auch denkbar, ihn direkt am oder im Metallgehäuse 30 anzuordnen. Es ist auch möglich, den Heizwendel 31 als Temperatursensor einzusetzen.

Findet die Kalkbestimmung immer bei kochendem Wasser statt, so wird das Signal des Wassertemperatursensors 14 nicht unbedingt benötigt, und es kann, wie bereits erwähnt, näherungsweise von einer festen Wassertemperatur ausgegangen werden. Die Messung der Wassertemperatur liefert jedoch genauere Resultate, da die Siedetemperatur des Wassers abhängig vom Luftdruck ist.

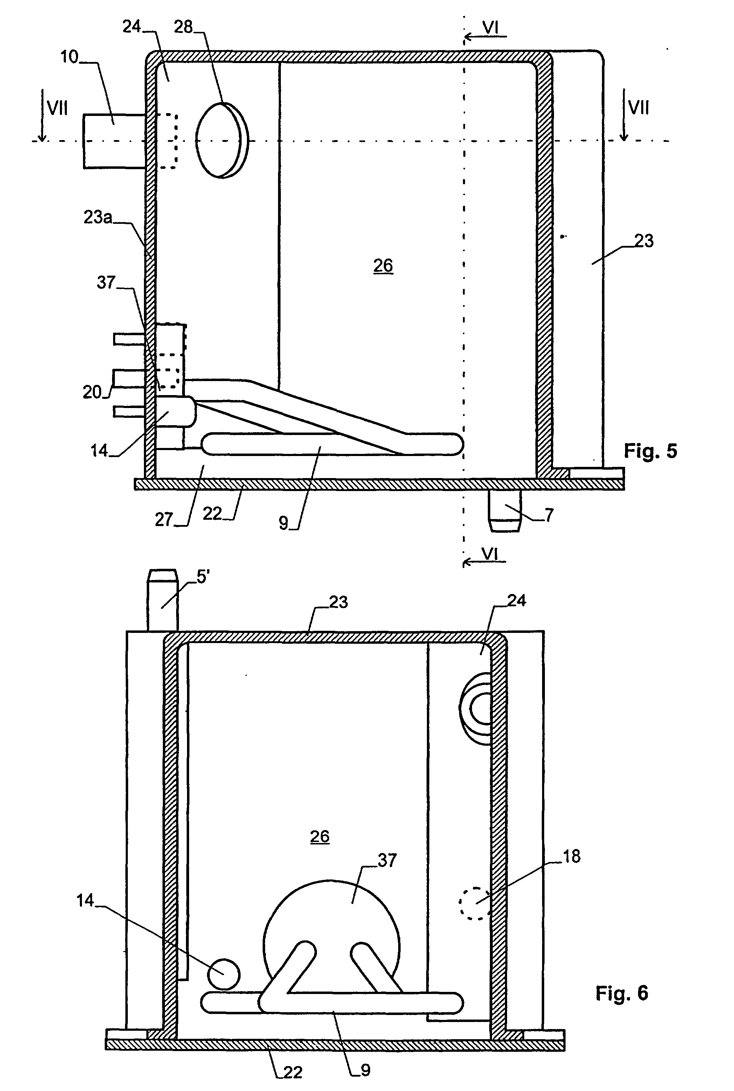

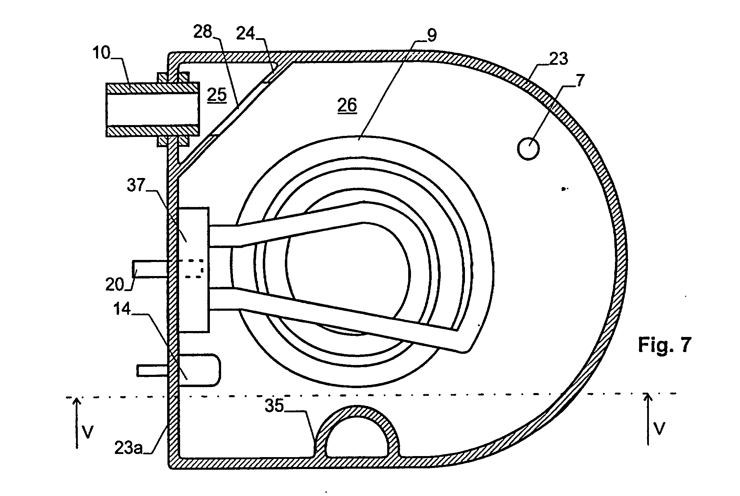

Fig. 5 - 7 zeigen eine zweite Ausführung des Boilers. Diese ist gleich wie jene gemäss Fig. 2 - 4 aufgebaut, mit dem Unterschied, dass die Heizung 9 nicht an der Grundplatte 22 befestigt ist. Vielmehr ist sie in einem Sockel 37 an einer Seitenwand 23a der Haube 23 angeordnet. Der Temperatursensor 20 ist ebenfalls im Sockel 37 angeordnet und steht in thermischem Kontakt mit dem Metallgehäuse der Heizung 9. Die Funktionsweise des Boilers nach Fig. 5 - 7 entspricht jener des Boilers nach Fig. 2 - 4.

Der hier beschriebene Boiler, und insbesondere der Kalkdetektor und der Niveaudetektor, eignen sich nicht nur für den Einsatz in Dampfgargeräten. Sie können überall dort eingesetzt werden, wo Dampf zu erzeugen ist. Der Kalksensor eignet sich prinzipiell für alle Arten von Boilern.

## Patentansprüche

1. Boiler, insbesondere für einen Dampfgenerator in einem Dampfgargerät, mit einem Wassertank (26) zur Aufnahme von Wasser, mit einer im Wassertank (26) angeordneten Heizung (9) zum Erhitzen des Wassers, mit einem Heiztemperatursensor (20), welcher in thermischem Kontakt mit der Heizung (9) steht, mit einer Kalk-Messeinheit (21), welche aufgrund des Signals vom Heiztemperatursensor eine Verkalkung der Heizung (9) detektiert, **gekennzeichnet durch** einen Wassertemperatursensor (14) zur Messung der Wassertemperatur, wobei die Kalk-Messeinheit (21) ausgestaltet ist, um aus der Differenz der Signale vom Heiztemperatursensor (20) und vom Wassertemperatursensor (14) die Verkalkung der Heizung (9) zu detektieren.

2. Boiler nach Anspruch 1, **dadurch gekennzeichnet, dass** die Heizung (9) eine Heizschlange mit einem Metallgehäuse (30) ist, wobei der Heiztemperatursensor (20) direkt oder über eine Metallbrücke (22) mit dem Metallgehäuse (30) in Kontakt steht.

3. Boiler nach Anspruch 2, **dadurch gekennzeichnet, dass** das Metallgehäuse (30) in einem Befestigungsbereich (33) an der Innenseite einer Metallwand (22) des Wassertanks (26) befestigt ist, und dass der Heiztemperatursensor (20) im Befestigungsbereich (33) an einer Aussenseite der Metallwand (22) angeordnet ist.

4. Boiler nach einem der vorangehenden Ansprüche, **dadurch gekennzeichnet, dass** die Kalk-Messeinheit (21) ausgestaltet ist, um durch Vergleich der Differenz der Signale vom Heiztemperatursensor (20) und vom Wassertemperatursensor (14) mit einem Grenzwert die Verkalkung der Heizung (9) zu detektieren.

5. Boiler nach einem der vorangehenden Ansprüche, **dadurch gekennzeichnet, dass** die Kalk-Messeinheit (21) ausgestaltet ist, die Verkalkung am Ende einer Aufheizphase des Boilers zu messen.

6. Boiler nach einem der vorangehenden Ansprüche, **dadurch gekennzeichnet, dass** er eine Einlassöffung (36) für Frischwasser aufweist, welche auf oder unterhalb der Höhe der Heizung (9) in den Wassertank (26) mündet, und insbesondere dass er eine an einer Innenseite des Wassertanks (26) nach unten laufende Frischwasserzuleitung (35) mit einer Öffnung auf oder unterhalb der Höhe der Heizung (9) aufweist.

7. Boiler nach einem der vorangehenden Ansprüche, **dadurch gekennzeichnet, dass** der Wassertank im Bereich der Heizung (9) eine Metallwand (22) und ansonsten Kunststoffwände (23) besitzt, und insbesondere dass die Kunststoffwände (23) aus Polysulfon sind.

8. Boiler nach einem der vorangehenden Ansprüche, **dadurch gekennzeichnet, dass** der Wassertemperatursensor (14) im Wassertank (26) angeordnet ist.

9. Boiler nach einem der vorangehenden Ansprüche mit einem Niveaudetektor (18, 19) zur Detektion eines Wasserniveaus im Wassertank (26) und einer Heizungssteuerung (4) zum bedarfsweisen An- und Abschalten der Heizung, wobei der Niveaudetektor (18, 19) derart ausgestaltet ist, dass er das Wasserniveau dann detektiert, wenn die Heizung (9) abgeschaltet ist.

10. Boiler nach Anspruch 9, **dadurch gekennzeichnet, dass** die Heizungssteuerung (4) derart ausgestaltet ist, dass sie Heizphasen, die eine gegebene Zeitdauer überschreiten, für eine Messung des Niveaudetektors (18, 19) unterbricht.

11. Dampfgargerät mit einem Boiler nach einem der vorangehenden Ansprüche.

## Claims

1. Boiler, in particular for a steam generator in a steam cooking device, with a water tank (26) for the reception of water, with a heating (9) arranged in the water tank (26) for the heating of the water, with a heating temperature sensor (20), which is in thermal contact with the heating (9), with a calcification measuring unit (21), which detects a calcification of the heating (9) based on the signal of the heating temperature sensor, **characterised by** a water temperature sensor (14) for measuring the water temperature, wherein the calcification measuring unit (21) is designed for detecting the calcification of the heating (9) based on the difference of the signals of the heating temperature sensor (20) and the water temperature sensor (14).

2. Boiler according to claim 1, **characterised in that** the heating (9) is a heating coil with a metal casing (30), wherein the heating temperature sensor (20) is in contact with the metal casing (30) directly or over a metal bridge (22)

3. Boiler according to claim 2, **characterised in that** the metal casing (30) is attached to an attachment range (33) at the inside of a metal wall (22) of the water tank (26), and that the heating temperature sensor (20) is arranged in the attachment range (33) at an outside of the metal wall (22).

4. Boiler according to one of the preceding claims, **characterised in that** the calcification measuring unit (21) is designed for detecting the calcification of the heating (9) by comparing of the difference between the signals of the heating temperature sensor (20) and the water temperature sensor (14) with a threshold value.

5. Boiler according to one of the preceding claims, **characterised in that** the calcification measuring unit (21) is designed for measuring the calcification at the end of a heating phase of the boiler.

6. Boiler according to one of the preceding claims, **characterised in that** it comprises an inlet opening (36) for fresh water, which opens into the water tank (26) at the height of or below the heating (9), and in particular that it comprises a fresh water supply pipe (35) going downwards along an inside of the water tank (26) with an opening at or below the height of the heating (9).

7. Boiler according to one of the preceding claims, **characterised in that**, the water tank comprises a metal wall (22) in the area of the heating (9) and otherwise plastic walls (23) and in particular that the plastic walls (23) are made from polysulfone.

8. Boiler according to one of the preceding claims, **characterised in that** the water temperature sensor (14) is arranged in the water tank (26).

9. Boiler according to one of the preceding claims with a level detector (18, 19) for detection of a water level in the water tank (26) and a heating controller (4) for switching the heating on and off on demand, wherein the level detector (18, 19) is designed such, that it detects the water level, when the heating (9) is switched off.

10. Boiler according to claim 9, **characterised in that** the heating controller (4) is designed such, that it interrupts heating phases, which extend a given time duration, for a measuring of the level detector (18, 19).

11. Steam cooking device with a boiler according to one of the preceding claims.

## Revendications

1. Chauffe-eau, en particulier pour un générateur de vapeur dans un engin de cuisson à la vapeur, avec un réservoir d'eau (26) pour recevoir de l'eau et dans lequel est disposé un chauffage (9) pour chauffer l'eau, avec un détecteur de la température de chauffage (20) en contact thermique avec le chauffage (9) et avec une unité de mesure du tartre (21) destinée à détecter un dépôt calcaire sur le chauffage (9), **caractérisé par** un détecteur (14) de la température de l'eau pour mesurer la température de celle-ci, l'unité de mesure du tartre (21) étant agencée pour détecter le degré d'entartrage du chauffage (9) à partir de la différence entre les signaux reçus du détecteur de la température de chauffage (20) et du détecteur de la température de l'eau (14).

2. Chauffe-eau selon la revendication 1, **caractérisé en ce que** la chauffage (9) est un serpentin de chauffage avec une enveloppe métallique (30), le détecteur de la température de chauffage (20) étant en contact direct ou par l'intermédiaire d'un pont métallique (22) avec l'enveloppe métallique (30).

3. Chauffe-eau selon la revendication 2, **caractérisé en ce qu'**à l'intérieur d'une zone d'attache (33) l'enveloppe métallique (30) est fixée sur la face intérieure d'une paroi métallique (22) du réservoir d'eau (26) et que le détecteur de la température de chauffage (20) est fixé sur une face extérieure de la paroi métallique (22), à l'intérieur de ladite zone d'attache.

4. Chauffe-eau selon une des revendications précédentes, **caractérisé en ce que** l'unité de mesure du tartre (21) est agencée pour détecter le degré d'entartrage du chauffage (9) par comparaison de la différence entre les signaux issus du détecteur de la température de chauffage (20) et du détecteur de la température de l'eau (14).

5. Chauffe-eau selon une des revendications précédentes, **caractérisé en ce que** l'unité de mesure du tartre (21) est agencée de façon à mesurer l'entartrage à la fin d'une phase de chauffage du chauffe-eau.

6. Chauffe-eau selon une des revendications précédentes, **caractérisé en ce qu'**il comporte une entrée (36) d'alimentation en eau fraîche débouchant dans le réservoir d'eau (26) à la hauteur ou au-dessous de la hauteur du chauffage (9), et en particulier **en ce qu'**il comporte une conduite d'amenée d'eau fraîche (35) dirigée vers le bas le long d'une face intérieure du réservoir d'eau (26) et présentant une ouverture à la hauteur ou au-dessous de la hauteur du chauffage (9).

7. Chauffe-eau selon une des revendications précédentes, **caractérisé en ce que** le réservoir comporte une paroi métallique (22) dans la région du chauffage (9), et des parois en matière plastique (23) ailleurs, et en particulier que ces dernières sont en polysulfone.

8. Chauffe-eau selon une des revendications précédentes, **caractérisé en ce que** le détecteur de la température de l'eau (14) est disposé dans le réservoir d'eau (26).

9. Chauffe-eau selon une des revendications précédentes avec un détecteur de niveau de l'eau (18,19) dans le réservoir d'eau (26) et avec une commande de chauffage (4) pour allumer et éteindre le chauffage selon les besoins, le détecteur de niveau (18,19) étant agencé de manière à détecter le niveau de l'eau lorsque le chauffage (9) est éteint.

10. Chauffe-eau selon la revendication 9 **caractérisé en ce que** la commande de chauffage (4) est agencée de façon à interrompre les phases de chauffage excédant une certaine durée afin d'effectuer une mesure au moyen du détecteur de niveau (18,19).

11. Engin de cuisson à la vapeur comportant un chauffe-eau selon une des revendications précédentes.
